(19) Europäisches Patentamt
European Patent Office
Office européen des brevets

(11) EP 1 619 010 A1

(12) EUROPÄISCHE PATENTANMELDUNG

(43) Veröffentlichungstag:
**25.01.2006 Patentblatt 2006/04**

(51) Int Cl.:
***B29C 67/24** (2006.01)* ***C08J 3/22** (2006.01)*
*B29K 67/00 (2006.01)* *B29K 77/00 (2006.01)*

(21) Anmeldenummer: **05015177.8**

(22) Anmeldetag: **13.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **23.07.2004 DE 102004035837**

(71) Anmelder: **Clariant GmbH**
**65929 Frankfurt am Main (DE)**

(72) Erfinder:
- **Lechner, Christian, Dl.**
  **86857 Hurlach (DE)**
- **Hohner, Gerd, , Dr.**
  **86368 Gersthofen (DE)**

(74) Vertreter: **Paczkowski, Marcus et al**
**Clariant GmbH**
**Patente, Marken, Lizenzen**
**Am Unisys-Park 1**
**65843 Sulzbach (DE)**

# (54) Verwendung von Polyolefinwachsen in Polykondensaten

(57) Die Erfindung betrifft die Verwendung von Polyolefinwachsen als Verarbeitungs- und/oder Dispergierhilfsmittel in Polykondensaten, dadurch gekennzeichnet, dass die Polyolefinwachse mit Hilfe von Metallocenkatalysatoren hergestellt wurden.

EP 1 619 010 A1

## Beschreibung

Die Erfindung betrifft die Verwendung von Polyolefinwachsen als Verarbeitungs- und/oder Dispergierhilfsmittel in Polykondensaten.

Die Verarbeitung von thermoplastischen Kunststoffen aus der Schmelze ist mit einer hohen thermischen und mechanischen Belastung verbunden. Um dadurch verursachte Produktschädigungen zu vermeiden, setzt man Additive wie Stabilisatoren, Gleitmittel, Antioxidantien, Trennmittel, Dispergierhilfsmittel und andere ein.

Bekannt ist der Einsatz von unterschiedlichen Wachsen als Entformungs-, Trenn-, Gleit- und Dispergiermittel insbesondere in Polyamiden wie beispielsweise Polyamid 6 und Polyamid 6.6 sowie Polyestern wie Polyethylenterephthalat und Polybutylenterephthalat. Häufig werden Amidwachse und Montanwachsester, Polyethylenwachse bzw. niedrigmolekulare Ethylen-Acrylsäure-Copolymere, aber auch Metallstearate als Trenn- und Entformungsmittel verwendet (JP-A-58/219255). Weiterhin werden Wachse als Gleitmittel verwendet, um das Fließverhalten der Schmelze zu verbessern. Durch den Gleitmittelzusatz werden die innere und äußere Reibung reduziert und die mechanochemische Schädigung des Materials vermindert. Gleitmittel sind dafür verantwortlich, dass der Kunststoff in der Verarbeitungsmaschine gezielt und ausreichend aufschließt und als homogene Schmelze vorliegt; sie verhindern ein zu starkes Kleben der Kunststoffschmelze an heißen Maschinenteilen und verbessern die Fließeigenschaften der Kunststoffschmelze.
Ferner können Wachse in Polykondensaten als Dispergiermittel für Pigmente, Füll- und Verstärkungsstoffe eingesetzt werden. Infolge der notwendigen hohen Verarbeitungstemperaturen, der hohen Scherbeanspruchung und der chemischen Aggressivität der Schmelze gegenüber Farbmitteln ist die Einfärbung von Polyamiden und Polyestern schwierig; die Auswahl der in Frage kommenden Farbmittel (Pigmente) ist eingeschränkt. Daher werden bei der Einarbeitung von Pigmenten, aber auch von Füll- und Verstärkungsstoffen üblicherweise Wachse der o.g. Art oder auch Stearatseifen als Dispergierhilfsmittel verwendet.
Die vorgenannten Additive können an verschiedenen Stellen des Herstell- oder Verarbeitungsprozesses, beispielsweise während der Polykondensation oder in einem der Polykondensation folgenden Compoundierschritt in den Kunststoff eingebracht werden. Auch besteht die Möglichkeit, pulverförmige Wachse auf das (warme) Kunststoffgranulat aufzutrommeln.
Die Wirkungsprofile der für Polyester und Polyamide bisher verwendeten Wachse sind in Bezug auf ihre Gleit-, Trenn- und Dispergierwirkung zum Teil nicht befriedigend.
Aufgabe war es daher, verbesserte Wachsadditive für diese Anwendungen zur Verfügung zu stellen.
Überraschenderweise wurde nun gefunden, dass sich mittels Metallocenkatalysatoren hergestellte Polyolefinwachse als überlegene Hilfsmittel bei der Polykondensatverarbeitung eignen. Darüber hinaus können sie mit Vorteil auch als Dispergierhilfe bei der Einarbeitung von Pigmenten sowie Füll- oder Verstärkungsstoffen eingesetzt werden.
Gegenstand der Erfindung ist daher die Verwendung von Polyolefinwachsen als Verarbeitungs- und/oder Dispergierhilfsmittel in Polykondensaten, dadurch gekennzeichnet, dass die Polyolefinwachse mit Hilfe von Metallocenkatalysatoren hergestellt wurden. Die Polyolefinwachse können sowohl in unveränderter als auch in polar modifizierter Form eingesetzt werden. Unter dem Begriff "Polyolefinwachse" werden im Folgenden beide Formen verstanden.

Bevorzugt sind die Polyolefinwachse aus Ethylen- und/oder unverzweigten oder verzweigten Olefineinheiten mit 3 bis 18C-Atomen aufgebaut.

Bevorzugt sind die Polyolefinwachse polar modifiziert.

Bevorzugt sind die Polyolefinwachse durch Oxidation mit Sauerstoff oder Sauerstoff enthaltenden Gasen oder durch radikalische Pfropfung mit α,ß-ungesättigten Carbonsäuren oder deren Derivaten polar modifiziert.

Bevorzugt weisen die Polyolefinwachse einen Tropf- oder Erweichungspunkt Ring/Kugel von 85 bis 165°C, eine Schmelzviskosität, gemessen 10°C oberhalb des Tropf- oder Erweichungspunktes, von 20 bis 40.000 mPa.s und eine Säurezahl von 0 bis 60 mg KOH/g auf.

Besonders bevorzugt weisen die Polyolefinwachse einen Tropf- oder Erweichungspunkt Ring/Kugel von 90 bis 160°C, eine Schmelzviskosität, gemessen 10°C oberhalb des Tropf- oder Erweichungspunktes, von 30 bis 20.000 mPa.s und eine Säurezahl von 0 bis 40 mg KOH/g auf.

Bevorzugt handelt es sich bei den Polykondensaten um Polyamide und/oder Polyester.

Bevorzugt handelt es sich bei den Polyamiden um solche vom Aminosäure-Typ und/oder vom Diamin-Dicarbonsäure-Typ.

Besonders bevorzugt handelt es sich bei den Polyamiden um Polyamid 6 und/oder Polyamid 6.6.

Besonders bevorzugt handelt es sich bei den Polyestern um Polyethylenterephthalat und/oder Polybutylenterephthalat handelt.

Bevorzugt sind die Polykondensate unverändert, gefärbt, gefüllt, verstärkt oder modifiziert.

Bevorzugt werden die Polyolefinwachse als Granulat; Schuppen, Feinkorn, Pulver und/oder Micronisat eingesetzt.

Bevorzugt erfolgt die Einarbeitung der Polyolefinwachse während der Polykondensation, der Compoundierung oder bei der formgebenden Verarbeitung.

Bevorzugt werden die Polyolefinwachse in Form von Masterbatches eingesetzt.

Bevorzugt werden die Polyolefinwachse in einer Menge von 0,01 bis 10,00 Gew.-%, bezogen auf das Polykondensat, eingesetzt.

Bevorzugt werden die Polyolefinwachse in einer Menge von 0,1 bis 2,00 Gew.-%, bezogen auf das Polykondensat, eingesetzt.

Als Polyolefinwachse kommen Homopolymerisate des Ethylens oder höherer 1-Olefine oder deren Copolymerisate untereinander in Frage. Als 1-Olefine werden lineare oder verzweigte Olefine mit 3 bis 18C-Atomen, vorzugsweise 3 bis 6C-Atomen, eingesetzt. Diese Olefine können eine mit der olefinischen Doppelbindung in Konjugation stehende aromatische Substitution aufweisen. Beispiele hierfür sind Propen, 1-Buten, 1-Hexen, 1-Octen oder 1-Octadecen sowie Styrol. Bevorzugt sind Homopolymerisate des Ethylens oder Propens oder deren Copolymerisate untereinander. Die Copolymeren bestehen zu 70 bis 99,9, bevorzugt zu 80 bis 99 Gew.-% aus einer Olefinart.

Geeignet sind Olefin-Homo- und Copolymerwachse mit einer gewichtsmittleren Molmasse $M_w$ zwischen 1.000 und 30.000 g/mol, bevorzugt zwischen 2.000 und 20.000 g/mol, einer zahlenmittleren Molmasse $M_n$ zwischen 500 und 20.000 g/mol, bevorzugt zwischen 1.000 und 10.000 g/mol, einem Tropf- bzw. Erweichungspunkt Ring/Kugel zwischen 80 und 165°C, bevorzugt zwischen 90 und 160°C und einer Schmelzviskosität, gemessen bei einer Temperatur 10°C oberhalb des Tropf- bzw. Erweichungspunktes, von maximal 40.000 mPa.s, bevorzugt zwischen 100 und 20.000 mPa.s.

Hierbei wurden die Molmassen mittels Gelpermeationschromatographie, die Tropfpunkte nach DIN 51801/2, die Erweichungspunkte Ring/Kugel nach DIN EN 1427 und die Schmelzviskositäten nach DIN 53019 mit einem Rotationsviskosimeter bestimmt.

Für die Herstellung der erfindungsgemäß verwendeten Polyolefinwachse werden Metallocenverbindungen der Formel I eingesetzt.

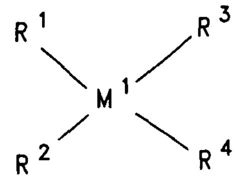

(I)

Diese Formel umfasst auch Verbindungen der Formel 1a,

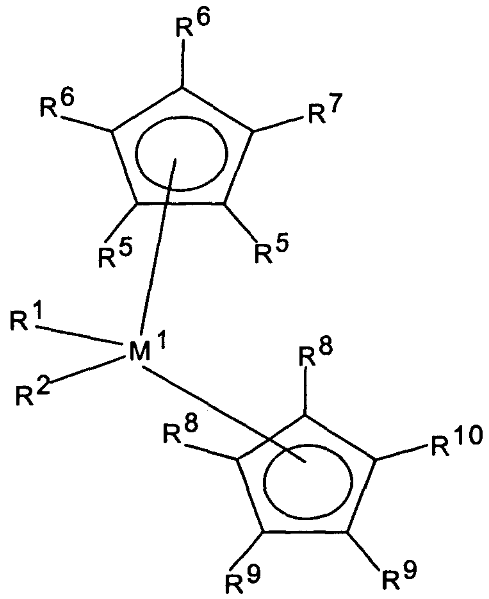

(Ia)

der Formel 1b

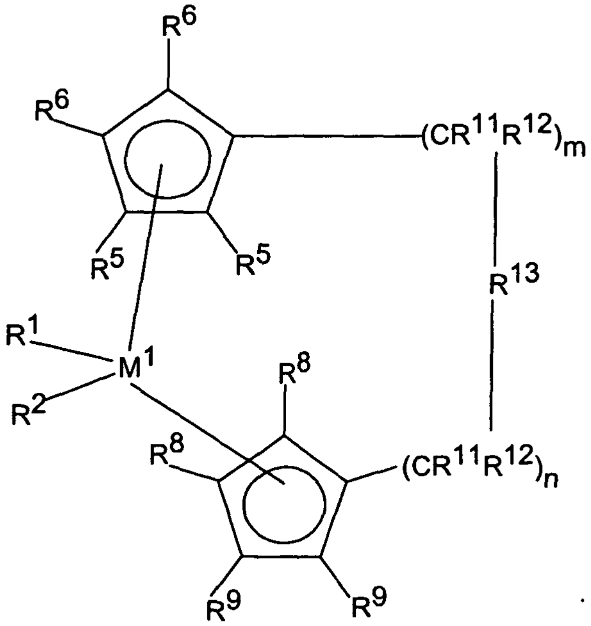

(Ib)

und der Formel 1c

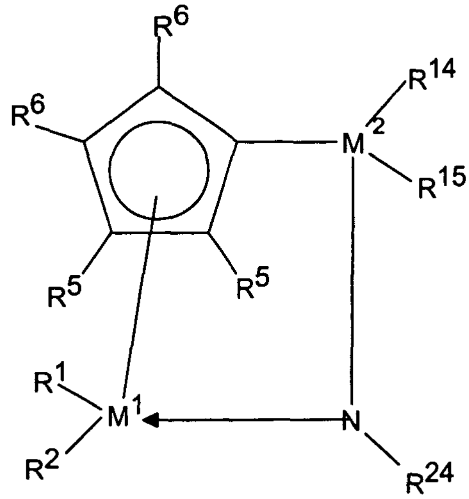

(Ic)

In den Formeln I, Ia und Ib ist $M^1$ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium.

$R^1$ und $R^2$ sind gleich oder verschieden und bedeuten ein Wasserstoffatom, eine $C_1$-$C_{10}$, vorzugsweise $C_1$-$C_3$-Alkylgruppe, insbesondere Methyl, eine $C_1$-$C_{10}$-, vorzugsweise $C_1$-$C_3$-Alkoxygruppe, eine $C_6$-$C_{10}$, vorzugsweise $C_6$-$C_8$-Arylgruppe, eine $C_6$-$C_{10}$-, vorzugsweise $C_6$-$C_8$-Aryloxygruppe, eine $C_2$-$C_{10}$, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogen-, vorzugsweise Chloratom.

$R^3$ und $R^4$ sind gleich oder verschieden und bedeuten einen ein- oder mehrkernigen Kohlenwasserstoffrest, welcher mit dem Zentralatom $M^1$ eine Sandwichstruktur bilden kann. Bevorzugt sind $R^3$ und $R^4$ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste $R^3$ und $R^4$ ein substituiertes Stickstoffatom sein, wobei $R^{24}$ die Bedeutung von $R^{17}$ hat und vorzugsweise Methyl, tert.-Butyl oder Cyclohexyl ist.

$R^5$, $R^6$, $R^7$, $R^8$, $R^9$ und $R^{10}$ sind gleich oder verschieden und bedeuten ein Wasserstoffatom, ein Halogenatom, vorzugsweise ein Fluor-, Chlor- oder Bromatom, eine $C_1$-$C_{10}$-, vorzugsweise $C_1$-$C_4$-Alkylgruppe, eine $C_6$-$C_{10}$-, vorzugsweise $C_6$-$C_8$-Arylgruppe, eine $C_1$-$C_{10}$-, vorzugsweise $C_1$-$C_3$-Alkoxygruppe, einen $-NR^{16}_2$-, $-SR^{16}$-, $-OSiR^{16}_3$-, $-SiR^{16}_3$- oder $-PR^{16}_2$-Rest, worin $R^{16}$ eine $C_1$-$C_{10}$-, vorzugsweise $C_1$-$C_3$-Alkylgruppe oder $C_6$-$C_{10}$-, vorzugsweise $C_6$-$C_8$-Arylgruppe oder im Falle Si oder P enthaltender Reste auch ein Halogenatom, vorzugsweise Chloratom ist oder je zwei benachbarte Reste $R^5$, $R^6$, $R^7$, $R^8$, $R^9$ oder $R^{10}$ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

$R^{13}$ ist

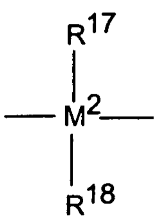 , 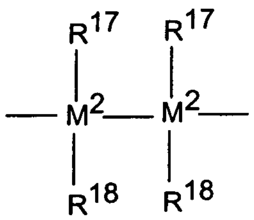 , 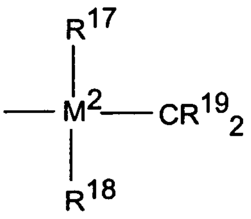 , 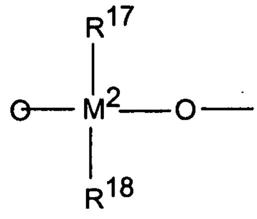 ,

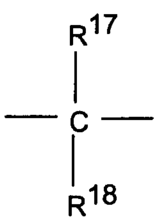 , 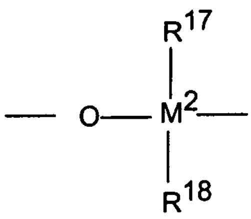 , 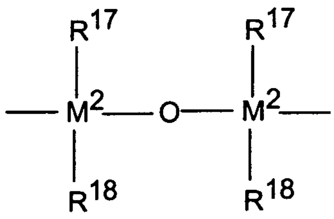

$=BR^{17}$, $=AlR^{17}$, -Ge-, -Sn-, -O-, -S-, =SO, $=SO_2$, $=NR^{17}$, =CO, $=PR^{17}$ oder $=P(O)R^{17}$, wobei $R^{17}$, $R^{18}$ und $R^{19}$ gleich oder verschieden sind und ein Wasserstoffatom, ein Halogenatom, vorzugsweise ein Fluor-, Chlor- oder Bromatom, eine $C_1$-$C_{30}$-, vorzugsweise $C_1$-$C_4$-Alkyl-, insbesondere Methylgruppe, eine $C_1$-$C_{10}$-Fluoralkyl-, vorzugsweise $CF_3$-Gruppe, eine $C_6$-$C_{10}$-Fluoraryl-, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxy-, insbesondere Methoxygruppe, eine $C_2$-$C_{10}$, vorzugsweise $C_2$-$C_4$-Alkenylgruppe, eine $C_7$-$C_{40}$-, vorzugsweise $C_7$-$C_{10}$-Aralkylgruppe, eine $C_8$-$C_{40}$-, vorzugsweise $C_8$-$C_{12}$-Arylalkenylgruppe oder eine $C_7$-$C_{40}$, vorzugsweise $C_7$-$C_{12}$-Alkylarylgruppe bedeuten, oder $R^{17}$ und $R^{18}$ oder $R^{17}$ und $R^{19}$ bilden jeweils zusammen mit den sie verbindenden Atomen einen Ring.

$M^2$ ist Silizium, Germanium oder Zinn, bevorzugt Silizium und Germanium. $R^{13}$ ist vorzugsweise $=CR^{17}R^{18}$, $=SiR^{17}R^{18}$, $=GeR^{17}R^{18}$, -O-, -S-, =SO, $=PR^{17}$ oder $=P(O)R^{17}$.

$R^{11}$ und $R^{12}$ sind gleich oder verschieden und haben die für $R^{17}$ genannte Bedeutung. m und n sind gleich oder verschieden und bedeuten null, 1 oder 2, bevorzugt null oder 1, wobei m plus n null, 1 oder 2, bevorzugt null oder 1 ist.

$R^{14}$ und $R^{15}$ haben die Bedeutung von $R^{17}$ und $R^{18}$.

Beispiele für geeignete Metallocene sind:

Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,

Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie $R^{20}{}_xNH_{4-x}BR^{21}{}_4$ $R^{20}{}_xPH_{4-x}BR^{21}{}_4$ $R^{20}{}_3CBR^{21}{}_4$ oder $BR^{21}{}_3$. In diesen Formeln bedeutet x eine Zahl von 1 bis 4, die Reste $R^{20}$ sind gleich oder verschieden, bevorzugt gleich, und bedeuten $C_1$-$C_{10}$-Alkyl oder $C_6$-$C_{18}$-Aryl oder zwei Reste $R^{20}$ bilden zusammen mit dem sie verbindenden Atom einen Ring, und die Reste $R^{21}$ sind gleich oder verschieden, bevorzugt gleich, und stehen für $C_6$-$C_{18}$-Aryl, das durch Alkyl, Haloalkyl oder Fluor substituiert sein kann. Insbesondere steht $R^{20}$ für Ethyl, Propyl, Butyl oder Phenyl und $R^{21}$ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz von polaren Katalysator-Giften aufrechtzuerhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Die Herstellung derartiger Polyolefinwachse ist beispielsweise in den Dokumenten EP-A-0 321 851, EP-A-0 321 852 sowie EP-A-0 384 264 beschrieben.

Die Wachse können sowohl in unveränderter als auch in polar modifizierter Form eingesetzt werden. Polar modifizierte Wachse werden in bekannter Weise aus unpolaren Wachsen durch Oxidation mit sauerstoffhaltigen Gasen,

beispielsweise Luft oder durch radikalische Pfropfreaktion mit polaren Monomeren, beispielsweise α,ß-ungesättigten Carbonsäuren oder deren Derivaten erhalten. Beispiele für α,ß-ungesättigte Carbonsäuren oder deren Derivate sind Acryl-, Methacryl- oder Maleinsäure sowie Ester, Amide oder Anhydride der genannten Säuren. Die polare Modifizierung von Metallocenwachsen durch Oxidation wird beispielsweise in EP 0 890 583, die Modifizierung durch Pfropfung beispielsweise in US 5,998,547 beschrieben.

Die polar modifizierten Wachse weisen gewichtsmittlere Molmassen $M_w$ zwischen 1.000 und 30.000 g/mol, bevorzugt zwischen 2.000 und 20.000 g/mol, zahlenmittlere Molmassen $M_n$ zwischen 500 und 20.000 g/mol, bevorzugt zwischen 1.000 und 10.000 g/mol, Tropf- bzw. Erweichungspunkte Ring/Kugel zwischen 80 und 165°C, bevorzugt zwischen 90 und 160°C, Schmelzviskositäten, gemessen bei einer Temperatur 10°C oberhalb des Tropf- bzw. Erweichungspunktes, von maximal 40.000 mPa.s, bevorzugt zwischen 100 und 20.000 mPa.s und Säurezahlen zwischen 0 und 60 mg KOH/g, bevorzugt zwischen 0 und 40 mg KOH/g auf.

Die Säurezahlen werden nach DIN 53402 bestimmt.

Bevorzugt wird das Wachs in Form von Granulat, Schuppen, Pulver und/oder Micronisat eingesetzt.

Bevorzugt erfolgt die Einarbeitung von Wachsen während der Polykondensation, der Compoundierung oder der formgebenden Verarbeitung.

Die Einarbeitung der Metallocenwachse in die Polykondensate geschieht z.B. durch Einmischen bzw. Aufziehen derselben auf das kalte oder warme Trägerpolymer und dessen anschließende Verarbeitung durch einen formgebenden Verarbeitungsschritt (z.B. Spritzguss, Flachfolienherstellung, Kalandrieren) bzw. durch Eincompoundieren mittels eines Extruders, wobei das Wachs vor der Extrusion mit dem Kunststoff vermischt oder während der Extrusion mittels Seitendosierung eingebracht werden kann.

Beispiele

Die erfindungsgemäß zu verwendenden Wachse wurden in Polyamid 6 unverstärkt, Polyamid 6, verstärkt mit 30 % Glasfaser, sowie in Polybutylenterephthalat unverstärkt und Polybutylenterephthalat, verstärkt mit 30 % Glasfaser, getestet. Für die nicht erfindungsgemäßen Vergleichsbeispiele wurden zum einen das unmodifizierte Polymer sowie ein unmodifiziertes Ziegler-Polyethylenwachs (Licowax® PE 520, Clariant GmbH), ein Montanwachs (Licowax® E, Clariant GmbH), ein Ethylen-Acrylsäure Copolymerwachs (A-C® 540, Fa. Honeywell), ein Amidwachs (Ethylen-bis-stearamid, Licolub® FA 1, Clariant GmbH) und Calciumstearat eingesetzt.

Tabelle 1: Eingesetzte Wachse

| | Wachstyp | Tropfpunkt | Viskosität (140°C) | Säurezahl |
|---|---|---|---|---|
| | | °C | mPa.s | mg KOH/g |
| erfindungsgemäß | TP Licocene® PE 4201 | 128 | 60 | - |
| erfindungsgemäß | TP Licocene® PE MA 4221 (Metallocen-PE-Wachs, gepfropft mit 3 Gew.-% Maleinsäureanhydrid) | 126 | 100 | 17 |
| Vergleich | Licowax® PE 520 | 118 | 650 | - |
| Vergleich | Licowax® E | 82 | 30/100°C | 18 |
| Vergleich | A-C® 540 | 105 | 580 | 40 |
| Vergleich | Licolub® FA 1 | 142 | 10/150°C | 6 |

Die Wachse wurden bei allen Versuchen (außer Pigmentdispergierung) in einer Menge, bezogen auf das Polykondensat, von 0,3 Gew.-% eingesetzt. Untersucht wurden Trennwirkung, Fließverbesserung, Farbe, mechanische Eigenschaften und die Dispergierwirkung für Pigmente.

Die Wachse wurden in das Polymergranulat eingemischt, mittels eines Doppelschneckenextruders eincompoundiert und anschließend nach Vortrocknung durch Spritzguss verarbeitet.
Sämtliche Versuchsserien wurden unter identischen Bedingungen (Temperaturprogramme, Schneckengeometrien, Spritzgießparameter etc.) durchgeführt.

Beispiel 1: Trennwirkung

Die Trennwirkung (äußere Gleitwirkung) von Gleitmitteln in technischen Kunststoffen wie Polyamiden und Polyestern wird durch Entformungskraftmessung beim Spritzgießen quantifiziert. Dazu wird eine zylindrische Hülse im

Spritzgießverfahren hergestellt und die benötigte Maximalkraft zum Entformen der Hülse aus dem Werkzeug als Entformungskraft registriert. Je niedriger die Entformungskraft, desto besser ist die äußere Gleitwirkung des eingesetzten Gleitmittels.

Tabelle 2: Untersuchung der Trennwirkung

| Entformungskraft [N] | Polyamid 6 | | Polybutylenterephthalat | |
|---|---|---|---|---|
| | unverstärkt | verstärkt | unverstärkt | verstärkt |
| Ohne Wachs | > 10 000 | 2500 | 7500 | 4600 |
| TP Licocene® PE 4201 | 500 | 850 | 800 | 1100 |
| TP Licocene® PE MA 4221 | 450 | 750 | 750 | 1050 |
| Licowax® PE 520 | 700 | 1100 | 950 | 1600 |
| Licolub FA 1 | 650 | 1200 | 800 | 1250 |
| Licowax E | 550 | 950 | 850 | 1100 |
| A-C® 540 | 750 | 1300 | 950 | 1650 |
| Calciumstearat | 700 | 1250 | 900 | 1150 |

Beispiel 2: Fließverbesserung

Die durch Gleitmittel in technischen Kunststoffen wie Polyamiden und Polyestern bewirkte Fließverbesserung (innere Gleitwirkung) wird durch die Bestimmung der Fließlänge mittels des sog. "Spiraltests" quantifiziert. Dazu wird eine skalierte Spirale im Spritzgießverfahren hergestellt und die Länge bestimmt. Je länger der Fließweg (d.h. die Spirale), desto besser ist die innere Gleitwirkung, d.h. die Fließfähigkeit des Polymers.

Tabelle 3: Untersuchung der Fließverbesserung

| Länge der Fließspirale [cm] | Polyamid 6 | | Polybutylenterephthalat | |
|---|---|---|---|---|
| | unverstärkt | verstärkt | unverstärkt | verstärkt |
| Ohne Wachs | 41,5 | 36,2 | 37,5 | 27,3 |
| TP Licocene® PE 4201 | 44,0 | 40,5 | 38,9 | 29,0 |
| TP Licocene® PE MA 4221 | 44,2 | 40,8 | 39,0 | 29,3 |
| Polyethylenwachs | 41,5 | 36,9 | 37,7 | 27,3 |
| Amidwachs | 42,3 | 37,6 | 38,3 | 28,1 |
| Montanwachsester | 43,9 | 40,3 | 37,9 | 28,8 |
| Ethylen-Acrylsäure Copolymer | 40,9 | 36,3 | 37,3 | 26,9 |
| Calciumstearat | 42,5 | 39,2 | 38,1 | 27,9 |

Beispiel 3: Farbmessung

Die Herstellung der Spritzplatten zur Farbmessung erfolgte analog den Beispielen 1 und 2. An den erhaltenen Platten wurde mittels eines Farbmessgerätes (Minolta CM 3600 d) der Yellownessindex bestimmt. Je geringer der Yellownessindex, desto heller und optisch weißer erscheint der Artikel.

Tabelle 4: Farbwirkung

| Yellownessindex | Polyamid 6 | | Polybutylenterephthalat | |
|---|---|---|---|---|
| | unverstärkt | verstärkt | unverstärkt | verstärkt |
| Ohne Wachs | 5 | 16 | 6 | 18 |
| TP Licocene® PE 4201 | 6 | 14 | 6 | 19 |

Tabelle fortgesetzt

| Yellownessindex | Polyamid 6 | | Polybutylenterephthalat | |
|---|---|---|---|---|
| | unverstärkt | verstärkt | unverstärkt | verstärkt |
| TP Licocene® PE MA 4221 | 5 | 13 | 6 | 18 |
| Polyethylenwachs | 7 | 16 | 7 | 19 |
| Amidwachs | 7 | 16 | 8 | 19 |
| Montanwachsester | 9 | 18 | 9 | 20 |
| Ethylen-Acrylsäure Copolymer | 7 | 15 | 7 | 19 |
| Calciumstearat | 7 | 17 | 8 | 19 |

Beispiel 4: Mechanische Eigenschaften

Gemäß Beispiel 3 wurden Normprobekörper gespritzt und die mechanischen Kennwerte (Kerbschlagzähigkeit) bestimmt.

Tabelle 5: Mechanische Eigenschaften (Kerbschlagzähigkeit)

| Kerbschlagzähigkeit [kJ/m$^2$] | Polyamid 6 | | Polybutylenterephthalat | |
|---|---|---|---|---|
| | unverstärkt | verstärkt | unverstärkt | verstärkt |
| Ohne Wachs | 4 | 13,5 | 6 | 10 |
| TP Licocene® PE 4201 | 4 | 14 | 7 | 11 |
| TP Licocene® PE MA 4221 | 5 | 15 | 7 | 12 |
| Polyethylenwachs | 4 | 13 | 5 | 10 |
| Amidwachs | 4 | 13,5 | 6 | 10 |
| Montanwachsester | 4 | 13 | 6 | 10 |
| Ethylen-Acrylsäure Copolymer | 4 | 13 | 6 | 9,5 |
| Calciumstearat | 4 | 13 | 6 | 10 |

Beispiel 5: Dispergierung von Pigmenten

Quantifiziert wird die Dispergierwirkung durch den sogenannten Filterdrucktest, bei dem der Druckaufbau vor einem Filter mit bestimmter Maschenweite gemessen wird. Je besser dispergiert die Pigmente sind, desto leichter kann die Schmelze den Filter passieren. Somit ist ein kleiner Filterdruckwert (gemessen in [bar/g Pigment]) ein Nachweis für gute Dispergierwirkung der Gleitmittel.
Als Pigment wurde PV Echtrosa ausgewählt, da dieses sowohl in Polyamid als auch in Polyestern schwer dispergierbar ist. Die Pigmente und Wachse wurden mittels Kaltmischung eingemischt und mit einem Doppelschneckenextruder eincompoundiert. Anschließend erfolgte die Ermittlung des Druckfilterwertes über ein 14 $\mu$m-Filter.
Die Einsatzkonzentrationen betrugen in diesem Beispiel 5 Gew. % Wachs, 30 Gew.-% Pigment PV Echtrosa und 65 Gew.-% Polymer.

Tabelle 6: Dispergierung von Pigmenten (Filterdrucktest)

| Filterdruckwert [bar/g Pigment] | Polyamid 6 unverstärkt | Polybutylenterephthalat unverstärkt |
|---|---|---|
| TP Licocene® PE 4201 | 3,0 | 3,0 |
| TP Licocene® PE MA 4221 | 2,5 | 2,7 |
| Amidwachs | 4,8 | 4,1 |
| Montanwachsester | 3,6 | 3,1 |
| Ethylen-Acrylsäure Copolymer | 6,2 | 7,3 |

Tabelle fortgesetzt

| Filterdruckwert [bar/g Pigment] | Polyamid 6 unverstärkt | Polybutylenterephthalat unverstärkt |
|---|---|---|
| Calciumstearat | 8,4 | 7,9 |

**Patentansprüche**

1. Verwendung von Polyolefinwachsen als Verarbeitungs- und/oder Dispergierhilfsmittel in Polykondensaten, **dadurch gekennzeichnet, dass** die Polyolefinwachse mit Hilfe von Metallocenkatalysatoren hergestellt wurden.

2. Verwendung von Polyolefinwachsen nach Anspruch 1, **dadurch gekennzeichnet, dass** die Polyolefinwachse aus Ethylen- und/oder unverzweigten oder verzweigten Olefineinheiten mit 3 bis 18C-Atomen aufgebaut sind.

3. Verwendung von Polyolefinwachsen nach Anspruch 1 oder 2, **dadurch gekennzeichnet, dass** die Polyolefinwachse polar modifiziert sind.

4. Verwendung von Polyolefinwachsen nach einem oder mehreren der Ansprüche 1 bis 3, **dadurch gekennzeichnet, dass** die Polyolefinwachse durch Oxidation mit Sauerstoff oder Sauerstoff enthaltenden Gasen oder durch radikalische Pfropfung mit $\alpha$,ß-ungesättigten Carbonsäuren oder deren Derivaten polar modifiziert sind.

5. Verwendung von Polyolefinwachsen nach einem oder mehreren der Ansprüche 1 bis 4, **dadurch gekennzeichnet, dass** die Polyolefinwachse einen Tropf- oder Erweichungspunkt Ring/Kugel von 85 bis 165°C, eine Schmelzviskosität, gemessen 10°C oberhalb des Tropf- oder Erweichungspunktes, von 20 bis 40.000 mPa.s und eine Säurezahl von 0 bis 60 mg KOH/g aufweisen.

6. Verwendung von Polyolefinwachsen nach einem oder mehreren der Ansprüche 1 bis 5, **dadurch gekennzeichnet, dass** die Polyolefinwachse einen Tropf- oder Erweichungspunkt Ring/Kugel von 90 bis 160°C, eine Schmelzviskösität, gemessen 10°C oberhalb des Tropf- oder Erweichungspunktes, von 30 bis 20.000 mPa.s und eine Säurezahl von 0 bis 40 mg KOH/g aufweisen.

7. Verwendung nach einem oder mehreren der Ansprüche 1 bis 6, **dadurch gekennzeichnet, dass** es sich bei den Polykondensaten um Polyamide und/oder Polyester handelt.

8. Verwendung nach einem oder mehreren der Ansprüche 1 bis 7, **dadurch gekennzeichnet, dass** es sich bei den Polyamiden um solche vom Aminosäure-Typ und/oder vom Diamin-Dicarbonsäure-Typ handelt.

9. Verwendung nach einem oder mehreren der Ansprüche 1 bis 8, **dadurch gekennzeichnet, dass** es sich bei den Polyamiden um Polyamid 6 und/oder Polyamid 6.6 handelt.

10. Verwendung nach einem oder mehreren der Ansprüche 1 bis 7, **dadurch gekennzeichnet, dass** es sich bei den Polyestern um Polyethylenterephthalat und/oder Polybutylenterephthalat handelt.

11. Verwendung nach einem oder mehreren der Ansprüche 1 bis 10, **dadurch gekennzeichnet, dass** die Polykondensate unverändert, gefärbt, gefüllt, verstärkt oder modifiziert sind.

12. Verwendung nach einem oder mehreren der Ansprüche 1 bis 11, **dadurch gekennzeichnet, dass** die Polyolefinwachse als Granulat, Schuppen, Feinkorn, Pulver und/oder Micronisat eingesetzt wird.

13. Verwendung nach einem oder mehreren der Ansprüche 1 bis 12, **dadurch gekennzeichnet, dass** die Einarbeitung der Polyolefinwachse während der Polykondensation, der Compoundierung oder bei der formgebenden Verarbeitung erfolgt.

14. Verwendung nach einem oder mehreren der Ansprüche 1 bis 13, **dadurch gekennzeichnet, dass** die Polyolefinwachse in Form von Masterbatches eingesetzt werden.

15. Verwendung nach einem oder mehreren der Ansprüche 1 bis 14, **dadurch gekennzeichnet, dass** die Polyolefinwachse in einer Menge von 0,01 bis 10,00 Gew.-%, bezogen auf das Polykondensat, eingesetzt werden.

**16.** Verwendung nach einem oder mehreren der Ansprüche 1 bis 15, **dadurch gekennzeichnet, dass** die Polyolefinwachse in einer Menge von 0,1 bis 2,00 Gew.-%, bezogen auf das Polykondensat, eingesetzt werden.

Europäisches Patentamt

# EUROPÄISCHER RECHERCHENBERICHT

Nummer der Anmeldung
EP 05 01 5177

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| X | WO 01/72855 A (CLARIANT GMBH; RICHTER, ERIC; KIESEL, HARALD) 4. Oktober 2001 (2001-10-04) * Seite 8, Zeile 10 - Zeile 26; Ansprüche 1-8 * | 1-9, 11-13, 15,16 | B29C67/24 C08J3/22 |
| X | WO 01/44387 A (BASF AKTIENGESELLSCHAFT; DECKERS, ANDREAS; WEBER, WILHELM; WEISS, STEF) 21. Juni 2001 (2001-06-21) * Seite 32, Zeile 1 - Seite 33, Zeile 31 * | 1,2,7-16 | |
| X | WO 03/087242 A (CLARIANT GMBH; KRENDLINGER, ERNST; NOWICKI, DIETER) 23. Oktober 2003 (2003-10-23) * Seite 1, Absatz 4; Beispiel 92; Tabellen 1,2 * | 1-7, 11-13, 15,16 | |
| X | DE 100 63 422 A1 (CLARIANT GMBH) 2. August 2001 (2001-08-02) * Beispiele 45-49,57-60,65-69 * | 1-6 | |
| | | | RECHERCHIERTE SACHGEBIETE (Int.Cl.7) |
| X | DE 100 23 441 A1 (CLARIANT GMBH) 29. November 2001 (2001-11-29) * Absatz [0042] * | 1-6 | B29C C08J C08L |
| X | PATENT ABSTRACTS OF JAPAN Bd. 1997, Nr. 10, 31. Oktober 1997 (1997-10-31) & JP 09 146300 A (FUJI XEROX CO LTD), 6. Juni 1997 (1997-06-06) * Zusammenfassung * | 1-5,7, 11-13 | |
| A | PATENT ABSTRACTS OF JAPAN Bd. 2003, Nr. 11, 5. November 2003 (2003-11-05) & JP 2003 183454 A (TOYO INK MFG CO LTD), 3. Juli 2003 (2003-07-03) * Zusammenfassung * | 14 | |
| | -/-- | | |

Der vorliegende Recherchenbericht wurde für alle Patentansprüche erstellt

1

| Recherchenort | Abschlußdatum der Recherche | Prüfer |
|---|---|---|
| Den Haag | 28. Oktober 2005 | Van Nieuwenhuize, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 05 01 5177

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>Bd. 2003, Nr. 11,<br>5. November 2003 (2003-11-05)<br>& JP 2003 183447 A (TOYO INK MFG CO LTD),<br>3. Juli 2003 (2003-07-03)<br>* Zusammenfassung *<br>----- | 14 | |
| A | DE 100 09 752 A1 (CLARIANT GMBH)<br>6. September 2001 (2001-09-06)<br>* Anspruch 1 *<br>----- | 14 | |
| | | | RECHERCHIERTE SACHGEBIETE (Int.Cl.7) |

Der vorliegende Recherchenbericht wurde für alle Patentansprüche erstellt

1

| Recherchenort | Abschlußdatum der Recherche | Prüfer |
|---|---|---|
| Den Haag | 28. Oktober 2005 | Van Nieuwenhuize, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.** EP 05 01 5177

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2005

| Im Recherchenbericht angeführtes Patentdokument | Datum der Veröffentlichung | Mitglied(er) der Patentfamilie | Datum der Veröffentlichung |
|---|---|---|---|
| WO 0172855 A | 04-10-2001 | CN 1420897 A | 28-05-2003 |
| | | DE 10015593 A1 | 11-10-2001 |
| | | EP 1274748 A1 | 15-01-2003 |
| | | JP 2003528948 T | 30-09-2003 |
| | | US 2003114322 A1 | 19-06-2003 |
| WO 0144387 A | 21-06-2001 | AT 269887 T | 15-07-2004 |
| | | CN 1409748 A | 09-04-2003 |
| | | EP 1238026 A2 | 11-09-2002 |
| | | ES 2223635 T3 | 01-03-2005 |
| | | JP 2003517081 T | 20-05-2003 |
| | | US 2003019400 A1 | 30-01-2003 |
| WO 03087242 A | 23-10-2003 | DE 10216118 A1 | 22-04-2004 |
| | | EP 1497384 A1 | 19-01-2005 |
| | | US 2005176866 A1 | 11-08-2005 |
| DE 10063422 A1 | 02-08-2001 | KEINE | |
| DE 10023441 A1 | 29-11-2001 | KEINE | |
| JP 09146300 A | 06-06-1997 | JP 3463436 B2 | 05-11-2003 |
| JP 2003183454 A | 03-07-2003 | KEINE | |
| JP 2003183447 A | 03-07-2003 | KEINE | |
| DE 10009752 A1 | 06-09-2001 | KEINE | |

EPO FORM P0461

Für nähere Einzelheiten zu diesem Anhang : siehe Amtsblatt des Europäischen Patentamts, Nr.12/82